# EUROPÄISCHE PATENTANMELDUNG

(11) **EP 3 048 140 A1**
(43) Veröffentlichungstag der Anmeldung: **27.07.2016**
(21) Anmeldenummer: 15000182.4
(22) Anmeldetag: 22.01.2015
(51) Int. Cl.: C09C 1/62, C09C 1/64, C09B 63/00, C09B 67/00

(54) **Spiegeleffekt-Druckfarbe**

(71) Anmelder: Schlenk Metallic Pigments GmbH, 91154 Roth (DE)
(72) Erfinder: Weinberg, Maria, 91154 Roth (DE); Reiter, Andreas, 91154 Roth (DE)
(74) Vertreter: Müller-Boré & Partner Patentanwälte PartG mbB

(57) **Zusammenfassung**

Die vorliegende Erfindung betrifft eine Spiegeleffekt-Druckfarbe, welche transparente und/oder transluzente Teilchen enthält, sowie die Verwendung der Spiegeleffekt-Druckfarbe zum Bedrucken eines transparenten oder transluzenten Substrats, wie zum Beispiel Glas, Polycarbonat oder PET. Zudem betrifft die vorliegende Erfindung einen Precursor für die vorstehende Spiegeleffekt-Druckfarbe.

## Beschreibung

Die vorliegende Erfindung betrifft eine Spiegeleffekt-Druckfarbe, welche transparente und/oder transluzente Teilchen enthält, sowie die Verwendung der Spiegeleffekt-Druckfarbe zum Bedrucken eines transparenten oder transluzenten Substrats, wie zum Beispiel Glas, Polycarbonat oder PET. Zudem betrifft die vorliegende Erfindung einen Precursor für die vorstehende Spiegeleffekt-Druckfarbe.

Spiegeleffekt-Druckfarben werden eingesetzt, um Spiegeleffekte auf vorwiegend glatten Substraten zu erzeugen. Ihr Einsatz erfolgt unter anderem im Bereich der Etikettherstellung, um durch metallischen Glanz beziehungsweise einen Spiegeleffekt dem Substrat einen hochwertig wirkenden optischen Effekt zu verleihen. Spiegeleffekt-Druckfarben werden beispielsweise für das Bedrucken von Etiketten für Getränke, Kosmetik, Lebensmittel und deren Verpackungen verwendet. Ein weiteres Einsatzgebiet ist die Consumer-Elektronik, bei der Spiegeleffekt-Druckfarben zum Bedrucken von Gehäusen und Displayrändern verwendet werden. In vielen Anwendungsgebieten, unter anderem in der Automobilindustrie, können Spiegeleffekt-Druckfarben über die Inmold-Decoration-Technik in einer Vielzahl verschiedener Anwendungen eingezetzt werden.

Allerdings kann es insbesondere beim Bedrucken von transparenten beziehungsweise transluzenten Substraten vorkommen, dass der Spiegeleffekt optische Fehler aufweist. Zu derartigen Fehlern zählen insbesondere "weiße Punkte" oder "Schlieren", die der Fachmann als optische Inhomogenität, Wolkigkeit oder Haze bezeichnet.

Darüber hinaus weisen mit üblichen Spiegeleffekt-Druckfarben erzielbare Bedrukkungen häufig einen weiteren optischen Fehler auf: Der Spiegeleffekt, der mit herkömmlichen Spiegeleffekt-Druckfarben erzielt werden kann, ist häufig auf einen relativ engen Bereich von Betrachtungswinkeln beschränkt. In der Regel zeigen mit herkömmlichen Spiegeleffekt-Druckfarben beschichtete Substrate bei bestimmten Betrachtungswinkeln (außerhalb des Bereichs der Totalreflexion) sehr dunkle Metalleffekte. Die bedruckte Fläche zeigt in unterschiedlichen Betrachtungswinkeln unterschiedliches Farb- und Glanzverhalten, was in der Fachsprache mit Flop bezeichnet wird. Aus Designgründen kann es jedoch wünschenswert sein, für einen möglichst großen Bereich von Betrachtungswinkeln, also einen breiten Beobachtungsraum, einen hellen Metalleffekt zu erzielen und den Flop zu reduzieren.

Somit liegt der vorliegenden Erfindung die Aufgabe zugrunde, eine Spiegeleffekt-Druckfarbe bereitzustellen, mit der sich eine Bedruckung ohne nennenswerte optische Fehler erzeugen lässt. Insbesondere soll eine Spiegeleffekt-Druckfarbe bereitgestellt werden, mit der sich eine Bedruckung erzeugen lässt, die keine optische Inhomogenität und über einen möglichst breiten Beobachtungsraum einen hellen, leicht bläulichen Metalleffekt/Spiegeleffekt, das heißt einen erhöhten L*-Wert und einen reduzierten b*-Wert, aufweisen soll. Zusätzlich soll ein Precursor für die vorstehende Spiegeleffekt-Druckfarbe bereitgestellt werden.

Diese Aufgabe wird durch die in den Ansprüchen gekennzeichneten Ausführungsformen gelöst.

Insbesondere wird eine Spiegeleffekt-Druckfarbe bereitgestellt, welche plättchenförmige Reflexionselemente sowie 0,0003 bis 0,7 Gew.-% transparenter und/oder transluzenter Teilchen, bezogen auf die Gesamtmasse der Spiegeleffekt-Druckfarbe, enthält. Vorzugsweise sind in der erfindungsgemäßen Spiegeleffekt-Druckfarbe 0,004 bis 0,6 Gew.-%, besonders bevorzugt 0,02 bis 0,3 Gew.-%, insbesondere 0,1 bis 0,3 Gew.-%, transparenter und/oder transluzenter Teilchen, bezogen auf das Gesamtgewicht der Farbe, enthalten. Weitere bevorzugte Bereiche für den Gehalt der transparenten und/oder transluzenten Teilchen in der erfindungsgemäßen Spiegeleffekt-Druckfarbe sind 0,0003 bis 0,6 Gew.-%, 0,0003 bis 0,5 Gew.-%, 0,0003 bis 0,4 Gew.-% und 0,0003 bis 0,3 Gew.-%; 0,004 bis 0,5 Gew.-%, 0,004 bis 0,4 Gew.-% und 0,004 bis 0,3 Gew.-%; 0,02 bis 0,5 Gew.-%, 0,02 bis 0,4 Gew.-% und 0,02 bis 0,3 Gew.-%; 0,1 bis 0,6 Gew.-%, 0,1 bis 0,5 Gew.-%, und 0,1 bis 0,4 Gew.-%.

Überraschenderweise wurde festgestellt, dass durch die Zugabe von geringsten Mengen an transparenten/transluzenden Teilchen eine Spiegeleffekt-Druckfarbe bereitgestellt werden kann, durch die eine Bedruckung zugänglich ist, die keine oder nur in unerheblichem Ausmaß optische Fehler aufweist. Dadurch kann die Ausschussrate, das heißt der Anteil der Bedruckungen mit optischen Fehlern, erheblich reduziert werden. Insbesondere kann mit der erfindungsgemäßen Spiegeleffekt-Druckfarbe eine Bedruckung erzeugt werden, die keine oder nur geringste optische Inhomogenität und über einen sehr breiten Beobachtungsraum einen hellen, leicht bläulichen Metalleffekt/Spiegeleffekt aufweist.

Bereits durch die Zugabe eines geringen Anteils an transluzenten und/oder transparenten Teilchen zu einer Spiegeleffekt-Druckfarbe treten Inhomogenitäten im Druckbild (wie weiße Punkte oder Schlieren), falls überhaupt, nur noch in geringstem Ausmaß auf. Darüber hinaus führt die Zugabe derartiger Teilchen bereits bei geringsten Masseanteilen zu einem aufgehellten, leicht bläulichen Spiegeleffekt, wobei hinsichtlich des Glanzes lediglich geringe Einbußen zu verzeichnen sind.

Es ist zwar aus dem Stand der Technik bekannt, transparente und/oder transluzente Teilchen in Lacken oder Druckfarben zu verwenden. Es war bisher jedoch nur bekannt, dass derartige Teilchen beispielsweise zur Rheologiesteuerung, als AntiAbsetzmittel oder zur Erhöhung der Kratzfestigkeit einer Lackierung eingesetzt werden. Diese bekannten Effekte können nur dann in nennenswertem Ausmaß erzielt werden, wenn ein relativ hoher Anteil der transparenten/transluzenten Teilchen zugegeben wird, üblicherweise mehr als 1 Gew.-%.

Das Material, aus dem die Teilchen aufgebaut sind, unterliegt keiner besonderen Einschränkung. Grundsätzlich kann jede Zusammensetzung verwendet werden, solange die Teilchen transluzent oder transparent sind. Erfindungsgemäß werden Teilchen dann als transluzent oder transparent angesehen, wenn mehr als 10 %, bevorzugt mehr als 20 %, insbesondere mehr als 30 % des einfallenden Lichts transmittiert werden können.

Geeignete Zusammensetzungen, aus denen die transluzenten/transparenten Teilchen aufgebaut sein können, umfassen, ohne darauf beschränkt zu sein, Silicium(di)oxid, Polystyrol, Polyurethan, Polyacrylat, Polypropylen, Polyamid, Glaszusammensetzungen, Bariumsulfat, sowie oberflächenmodifizierte Varianten davon, um nur einige zu nennen.

Die transparenten/transluzenten Teilchen weisen vorzugsweise einen Durchmesser von 1 bis 1000 nm, vorzugsweise 5 bis 100 nm, auf. Der Teilchendurchmesser wird vorzugsweise mit einem Rasterelektronenmikroskop per Bildanalyse bestimmt. Zugrundegelegt wird eine rasterelektronenmikroskopische Aufnahme, aus welcher der Teilchendurchmesser, das ist die aus der Abbildung erkennbare größte Längendimension des Teilchens, von mindestens 50 Teilchen bestimmt werden kann. Der Teilchendurchmesser kann auch durch Laserbeugung gemessen werden.

Die Geometrie der transparenten/transluzenten Teilchen unterliegt grundsätzlich keiner besonderen Einschränkung. Gemäß einer bevorzugten Ausführungsform weisen die transparenten/transluzenten Teilchen jedoch eine sphärische Geometrie auf.

Vorzugsweise sind die transparenten/transluzenten Teilchen aus pyrogenem Siliciumdioxid aufgebaut. Derartige Siliciumdioxidteilchen werden unter anderem von der Firma Evonik Industries unter der Bezeichnung "Aerosil^{®}" angeboten. Vorzugsweise ist das pyrogene Siliciumdioxid hydrophob. Ein gemäß der vorliegenden Erfindung besonders bevorzugtes hydrophobes pyrogenes Siliciumdioxid wird unter der Bezeichnung "Aerosil^{®} R 812" von Evonik Industries vertrieben.

Pyrogenes Siliciumdioxid hat insbesondere folgende Vorteile:
- geringer Einfluss auf Spiegeleffekt, akzeptabler Glanz;
- signifikanter Farbtonshift hin zu weißlich / blauen Effekten;
- chemisch stabil und inert; und
- leichte / gezielte Erhöhung der Viskosität möglich.

Spiegeleffekt-Druckfarben enthalten Reflexionselemente. Diese sind Teilchen, die einfallendes Licht reflektieren und dadurch den Spiegeleffekt bedingen oder verstärken. Beispiele für derartige Reflexionselemente umfassen unbeschichtete und beschichtete Glimmer- und Metallpigmente.

Vorzugsweise enthält die erfindungsgemäße Spiegeleffekt-Druckfarbe neben den transparenten/transluzenten Teilchen plättchenförmige Reflexionselemente. Diese Reflexionselemente reflektieren einfallendes Licht besonders stark und können somit wesentlich zum Spiegeleffekt beitragen.

Der Anteil der plättchenförmigen Reflexionselemente in der erfindungsgemäßen Spiegeleffekt-Druckfarbe beträgt vorzugsweise 3 bis 7 Gew.-%, besonders bevorzugt 4 bis 6 Gew.-%.

Das Verhältnis der Gewichtsanteile der Reflexionselemente zu den sphärischen Teilchen beträgt vorzugsweise 1 : 3·10⁻⁶ bis 1 : 0,2, besonders bevorzugt 1 : 0,003 bis 1 : 0,1.

Die plättchenförmigen Reflexionselemente können grundsätzlich aus einem beliebigen Material aufgebaut sein. Beispiele für plättchenförmige Reflexionselemente, die einen Spiegeleffekt bedingen oder unterstützen können, umfassen beschichtete oder unbeschichtete Metall(oxid)plättchen. Die plättchenförmigen Reflexionselemente sind vorzugsweise aus einem Metall oder einer Metalllegierung aufgebaut.

Gemäß einer besonders bevorzugten Ausführungform sind die plättchenförmigen Reflexionselemente aus Aluminium aufgebaut. Geeignete Aluminiumplättchen können unter anderem durch Herausstanzen aus Aluminiumfolie oder nach gängigen Mahl- und Verdüsungstechniken hergestellt werden. So sind beispielsweise Aluminiumplättchen aus dem Hallverfahren, einem Nassmahlverfahren, erhältlich.

Die Aluminiumplättchen können verschiedene Formen aufweisen. Es können beispielsweise lamellare und lenticulare Metallplättchen eingesetzt werden. Lamellare Metallplättchen zeichnen sich durch einen unregelmäßig strukturierten Rand aus und werden aufgrund ihres Erscheinungsbildes auch als "cornflakes" bezeichnet. Lenticulare Metallplättchen weisen einen im Wesentlichen regelmäßigen runden Rand auf und werden aufgrund ihres Erscheinungsbildes auch als "silverdollars" bezeichnet. Aufgrund ihrer unregelmäßigen Struktur erzeugen metallische Glanzpigmente auf der Basis von lamellaren Metallplättchen einen höheren Anteil an Streulicht als lenticulare Metallplättchen, wohingegen bei letztgenannten der Anteil des reflektierten Lichts überwiegt.

Die Aluminiumplättchen können passiviert sein, beispielsweise durch Eloxieren (Oxidschicht) oder Chromatieren.

Vorzugsweise sind die Aluminiumplättchen sog. *vacuum metallized pigments* (VMP-Pigmente). VMP-Pigmente können durch das Freisetzen von Aluminium von metallisierten Folien gewonnen werden. Sie zeichnen sich durch eine besonders geringe Dicke der Substratplättchen im Bereich von 5 bis 50 nm, vorzugsweise 10 bis 40 nm, und durch eine besonders glatte Oberfläche mit erhöhter Reflektivität aus. Die Dicke kann anhand einer rasterelektronenmikroskopischen Aufnahme bestimmt werden.

Die erfindungsgemäße Spiegeleffekt-Druckfarbe kann für die unterschiedlichsten Druckverfahren eingesetzt werden, wie zum Beispiel Offset, Flexodruck, Tiefdruck, Tampondruck und Siebdruck, um nur einige Verfahren zu nennen. Als Bedruckstoffe eignen sich Papier, Karton, Kunststoffsubstrate, Metalle, Folien und Gläser.

Die erfindungsgemäße Spiegeleffekt-Druckfarbe eignet sich insbesondere zum Bedrucken eines transparenten oder transluzenten Substrats, wie beispielsweise Glas, Polycarbonat und PET. Bei derartigen Substraten ist es besonders schwer, die vorstehenden optischen Fehler gewöhnlicher Spiegeleffekt-Druckfarben zu vermeiden. Wird jedoch die erfindungsgemäße Spiegeleffekt-Druckfarbe verwendet, treten optische Fehler nicht oder lediglich in geringem Ausmaß auf. Dadurch kann die Ausschussrate erheblich reduziert werden.

In einem weiteren Aspekt betrifft die vorliegende Erfindung einen Precursor für eine Spiegeleffekt-Druckfarbe. Die erfindungsgemäße Spiegeleffekt-Druckfarbe kann aus dem Precursor hergestellt werden; letztgenannter dient als Vorläufterprodukt zur Herstellung der Druckfarbe. Derartige Vorläuferprodukte/Precursoren für Spiegeleffekt-Druckfarben liegen üblicherweise in Form einer Suspension vor.

Grundsätzlich gelten für den Precursor die vorstehenden Ausführungen im Zusammenhang mit der erfindungsgemäßen Spiegeleffekt-Druckfarbe, soweit im Folgenden nichts anderes angegeben ist.

Die Spiegeleffekt-Druckfarbe kann durch Mischen des Precursors (beispielsweise 10 bis 60 Gew.-%, bezogen auf die Gesamtmasse der Druckfarbe) mit einem Lösemittel (beispielsweise 30 bis 90 Gew.-%), wie beispielsweise Ethylacetat, Methoxypropylacetat, 3-Methoxy-3-methylbutanol und deren Gemischen, hergestellt werden. Gegebenenfalls kann auch ein Bindemittel wie beispielsweise Nitrocellulose, üblicherweise mit einem Gehalt von 1 bis 10 Gew.-%, zugegeben werden.

Der Precursor enthält, bezogen auf die Gesamtmasse des Precursors, 0,001 bis 1,0 Gew.-%, vorzugsweise 0,02 bis 0,1 Gew.-%, transparenter und/oder transluzenter Teilchen. Weitere bevorzugte Bereiche sind 0,001 bis 0,1 Gew.-% sowie 0,02 bis 1,0 Gew.-%.

Wie die Spiegeleffekt-Druckfarbe enthält auch der Precursor plättchenförmige Reflexionselemente. Vorzugsweise enthält der Precursor 5 bis 30 Gew.-%, besonders bevorzugt 10 bis 15 Gew.-%, plättchenförmiger Reflexionselemente. Weitere bevorzugte Bereiche sind 5 bis 15 Gew.-% sowie 10 bis 30 Gew.-%.

Das Verhältnis der Gewichtsanteile der Reflexionselemente zu den sphärischen Teilchen im Precursor und in der Spiegeleffekt-Druckfarbe beträgt vorzugsweise 1 : 3·10⁻⁶ bis 1 : 0,2, besonders bevorzugt 1 : 0,003 bis 1 : 0,1.

Der Precursor weist den Vorteil auf, dass aus ihm durch Zumischen einfacher Rohstoffe, wie Löse- und Bindemittel, die erfindungsgemäße Spiegeleffekt-Druckfarbe hergestellt werden kann. Dadurch können Transport- und Lagerkosten erheblich gesenkt werden.

Die nachstehenden Beispiele dienen als weitere Erläuterung der vorliegenden Erfindung, ohne darauf beschränkt zu sein.

### Beispiel 1: Herstellung eines Precursors

Aerosil^{®} R 812 - Einflussuntersuchung auf Decomet^{®} 2000er Serie

Verwendet wird Decomet^{®} 2008. Dabei handelt es sich um VMP-Pigmente mit einer Dicke von 20-35 nm und einem d50 von 10-13 µm in Methoxypropylacetat.

Zu einer Suspension auf Basis von Decomet^{®} 2008 (10 %ige Suspension in Methoxypropylacetat) der Firma Schlenk, wurde Aerosil^{®} R 812 jeweils mit einem Anteil von 0,05 Gew.-%, 0,2 Gew.-% und 0,5 Gew.-%, bezogen auf die Gesamtmasse der erhaltenen Suspension, gemischt.

### Beispiel 2: Herstellung einer Spiegeleffektdruckfarbe

40 Gew.-% Precursor aus Beispiel 1, 3,6 Gew.-% Nitrocellulose (fest) und 56,4 Gew.-% Ethylacetat werden vermengt und homogenisiert.

Die erhaltene Druckfarbe wurde im Siebdruckverfahren 420 MESH auf Glassubstrate gedruckt und diese nach Trocknung im Trockenschrank für 10 min bei 160°C mit einem Glanzmessgerät des Typs BYK Trigloss vermessen.

Für die resultierenden Spiegeleffekt-Druckfarben wurden die folgenden Ergebnisse, zusammengefasst in Tabelle 1, erhalten.

**Tabelle 1**

| Aerosil^{®} R 812 | Haze | Glanz (60°) | L* | b* |
|---|---|---|---|---|
| 0 Gew.-% | 14,7 | 641 | 43,03 | +2,17 |
| 0,05 Gew.-% | 7,7 | 633 | 45,06 | +2,03 |
| 0,2 Gew.-% | 4,2 | 576 | 51,29 | +1,21 |
| 0,5 Gew.-% | 4,0 | 491 | 60,45 | +0,64 |

| | | | | |
|---|---|---|---|---|
| Haze, Glanz, L* und b* wurden gemäß DIN 67550, DIN 67530 und ASTMD 5767 bestimmt. | | | | |

Bereits mit 0,05 Gewichtsprozent Zugabe von Aerosil^{®} R 812 ergibt sich ein deutlich homogenerer Eindruck im Vergleich zur Referenzprobe/Nullprobe ohne Aerosil^{®} R 812. Bei Zugabe von 0,05 bis 0,2 Gew.-% Aerosil^{®} R 812 wird ein guter Kompromiss zwischen bläulich hellerer Farbe und Spiegeleffekt (Glanz) erzielt. Der Haze verbessert sich in diesem Zusammenhang signifikant.

Probedrucke im Siebdruckverfahren auf einem Glassubstrat zeigen eine signifikante Verbesserung der Homogenität im Vergleich zu Decomet^{®} 2008 ohne Zugabe von Aerosil^{®} R 812.

Zusätzlich werden Farb- und Glanzdifferenz aus unterschiedlichen Betrachtungswinkeln verringert. Somit ist der Flop der Druckfarbe deutlich reduziert.

Verschiedene Andrucke mit Druckfarbenzusammensetzungen einer Charge wichen untereinander bezüglich des Druckbildes nicht merklich voneinander ab; es wurde ein gleichmäßiges Druckbild erhalten.

### Beispiel 3: Herstellung eines Precursors

Aerosil^{®} R 812 - Einflussuntersuchung auf Decomet^{®} 4000er Serie

Verwendet wurde Decomet^{®} 4077 der Firma Schlenk. Dabei handelt es sich um VMP-Pigment mit einer Dicke von 10-15 nm und einem d50 von 6-8 µm in Methoxymethylbutanol.

Zu einer Suspension auf Basis von Decomet^{®} 4077 (10 %ige Suspension in Methoxymethylbutanol), wurde jeweils
0,05 Gewichtsprozent Aerosil^{®} R 812,
0,1 Gewichtsprozent Aerosil^{®} R 812,
0,2 Gewichtsprozent Aerosil^{®} R 812,
0,3 Gewichtsprozent Aerosil^{®} R 812,
0,4 Gewichtsprozent Aerosil^{®} R 812 und
0,5 Gewichtsprozent Aerosil^{®} R 812,
bezogen auf die Gesamtmasse der erhaltenen Suspension, gemischt.

Bereits bei einem Gehalt an Aerosil^{®} R 812 von 0,05 Gewichtsprozent, bezogen auf die Gesamtmasse der Spiegeleffekt-Druckfarbe, ergibt sich ein deutlich homogenerer Eindruck im Vergleich zur Nullprobe ohne Aerosil^{®} R 812. Bei Zugabe von 0,05 bis 0,4 Gew-% Aerosil^{®} R 812 wird ein guter Kompromiss zwischen bläulich hellerer Farbe und Spiegeleffekt erzielt.

Probedrucke im Siebdruckverfahren auf einem Glassubstrat zeigten eine signifikante Verbesserung der Homogenität im Vergleich zu Decomet^{®} 4077 ohne Zugabe an Aerosil^{®} R 812.

### Beispiel 4

Aerosil^{®} R 812 - Einflussuntersuchung auf Decomet^{®} 3000er Serie

Verwendet wird Decomet^{®} 3508. Dabei handelt es sich um VMP-Pigmente mit einer Dicke von 15 bis 25 nm und einem d50 von 10 bis 12 µm in Methoxypropylacetat.

Zu einer Suspension auf Basis von Decomet^{®} 3508 (10 %ige Suspension in Methoxypropylacetat) der Firma Schlenk, wurde Aerosil^{®} R 812 jeweils
0,1 Gewichtsprozent Aerosil^{®} R 812,
0,3 Gewichtsprozent Aerosil^{®} R 812 und
0,5 Gewichtsprozent Aerosil^{®} R 812,
bezogen auf die Gesamtmasse der erhaltenen Suspension, gemischt.

Probedrucke im Siebdruckverfahren zeigten eine deutliche Aufhellung des Farbtons, der sich zudem im Vergleich mit der Basis-Glanzeffekt-Druckfarbe ohne Aerosil^{®} R 812 ins Bläuliche verschob. Bei der second surface Anwendung (z. B. Siebdruck) wurden bei einem Gehalt an Aerosil^{®} R 812 zwischen 0,1 Gew.-% und 0,3 Gew.-% hinsichtlich der Homogenität die besten Ergebnisse erzielt. (Bei der second surface Anwendung handelt es sich um die Rückansicht des Druckes, d. h. die Bedruckung wird durch das transparente Substrat betrachtet.)

Die erfindungsgemäße Spiegeleffekt-Druckfarbe enthält transparente und/oder transluzente Teilchen. Überraschenderweise werden dadurch Bedruckungen erzielt, bei denen optische Fehler wie optische Inhomogenitäten bzw. Wolkigkeit nicht oder lediglich in geringem Ausmaß auftreten. Dadurch kann die Ausschussrate erheblich reduziert werden. Die Spiegeleffekt-Druckfarbe kann aus dem erfindungsgemäßen Precursor auf einfache Weise hergestellt werden.

## Patentansprüche

1. Spiegeleffekt-Druckfarbe, welche plättchenförmige Reflexionselemente sowie 0,0003 bis 0,7 Gew.-% transparenter und/oder transluzenter Teilchen enthält.

2. Spiegeleffekt-Druckfarbe nach Anspruch 1, wobei der Anteil der transparenten/transluzenten Teilchen 0,004 bis 0,6 Gew.-%, vorzugsweise 0,02 bis 0,3 Gew.-%, beträgt.

3. Spiegeleffekt-Druckfarbe nach Anspruch 1 oder 2, wobei die transparenten/transluzenten Teilchen einen Durchmesser von 1 bis 1000 nm, vorzugsweise 5 bis 100 nm, aufweisen.

4. Spiegeleffekt-Druckfarbe nach einem der vorhergehenden Ansprüche, wobei die transparenten/transluzenten Teilchen eine sphärische Geometrie aufweisen.

5. Spiegeleffekt-Druckfarbe nach einem der vorhergehenden Ansprüche, wobei die transparenten/transluzenten Teilchen aus pyrogenem Siliciumdioxid aufgebaut sind.

6. Spiegeleffekt-Druckfarbe nach einem der vorhergehenden Ansprüche, wobei die plättchenförmigen Reflexionselemente aus einem Metall oder einer Metalllegierung aufgebaut sind.

7. Spiegeleffekt-Druckfarbe nach einem der vorhergehenden Ansprüche, wobei die plättchenförmigen Reflexionselemente eine Dicke von 5 bis 50 nm, vorzugsweise 10 bis 40 nm, aufweisen.

8. Spiegeleffekt-Druckfarbe nach einem der vorhergehenden Ansprüche, wobei der Anteil der plättchenförmigen Reflexionselemente 3 bis 7 Gew.-%, vorzugsweise 4 bis 6 Gew.-%, beträgt.

9. Verwendung der Spiegeleffekt-Druckfarbe nach einem der Ansprüche 1 bis 8 zum Bedrucken eines transparenten oder transluzenten Substrats.

10. Precursor für eine Spiegeleffekt-Druckfarbe, welcher plättchenförmige Reflexionselemente sowie 0,001 bis 1,0 Gew.-% transparenter und/oder transluzenter Teilchen enthält.

11. Precursor nach Anspruch 10, wobei die transparenten/transluzenten Teilchen einen Durchmesser von 1 bis 1000 nm, vorzugsweise 5 bis 100 nm, aufweisen.

12. Precursor nach Anspruch 10 oder 11, wobei die transparenten/transluzenten Teilchen eine sphärische Geometrie aufweisen und/oder aus pyrogenem Siliciumdioxid aufgebaut sind.

13. Precursor nach einem der Ansprüche 10 bis 12, wobei der Anteil der plättchenförmigen Reflexionselemente 5 bis 30 Gew.-%, vorzugsweise 10 bis 15 Gew.-%, beträgt.

14. Precursor nach einem der Ansprüche 10 bis 13, wobei die plättchenförmigen Reflexionselemente aus einem Metall oder einer Metalllegierung aufgebaut sind.

15. Precursor nach einem der Ansprüche 10 bis 14, wobei die plättchenförmigen Reflexionselemente eine Dicke von 5 bis 50 nm, vorzugsweise 10 bis 40 nm, aufweisen.
